Europäisches Patentamt

European Patent Office

Office européen des brevets

(19)

(11) Numéro de publication: **0 314 243 B1**

## (12) FASCICULE DE BREVET EUROPEEN

(45) Date de publication de fascicule du brevet: **07.04.93**

(51) Int. Cl.5: **G02B 27/00**, G02B 27/64, G02B 13/10

(21) Numéro de dépôt: **88202353.4**

(22) Date de dépôt: **21.10.88**

---

(54) **Dispositif de rattrapage de la distorsion totale engendrée par la forme d'une paroi transparente.**

---

(30) Priorité: **27.10.87 FR 8714831**

(43) Date de publication de la demande:
**03.05.89 Bulletin 89/18**

(45) Mention de la délivrance du brevet:
**07.04.93 Bulletin 93/14**

(84) Etats contractants désignés:
**DE FR GB IT**

(56) Documents cités:
**EP-A- 0 025 335        EP-A- 0 270 166
WO-A-81/00499        FR-A- 1 222 433
GB-A- 1 296 573        US-A- 2 821 111**

**OPTICAL ENGINEERING, vol. 21, no. 1,
janvier-février 1982, pages 096-104, Society
of Photo-Optical Instrumentation Engineers,
Bellingham, Washington, US; Y. NETZER:
"Line-on-sight steering and stabilization"**

(73) Titulaire: **TELECOMMUNICATIONS RADIOE-
LECTRIQUES ET TELEPHONIQUES T.R.T.
88, rue Brillat Savarin
F-75013 Paris(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**DE GB IT**

(72) Inventeur: **Rollin, Joel
Société Civile S.P.I.D. 156, Boulevard Haussmann
F-75008 Paris(FR)**
Inventeur: **Perrin, Jean-Claude
Société Civile S.P.I.D. 156, Boulevard Haussmann
F-75008 Paris(FR)**
Inventeur: **Loy, Fernand
Société Civile S.P.I.D. 156, Boulevard Haussmann
F-75008 Paris(FR)**

(74) Mandataire: **Chaffraix, Jean et al
Société Civile S.P.I.D. 156, Boulevard Haussmann
F-75008 Paris (FR)**

---

## Description

L'invention concerne un dispositif de rattrapage, dans une certaine bande spectrale, de la distorsion optique résultant de l'observation d'un champ de vue à travers une paroi transparente, interposée entre ledit champ de vue et un récepteur muni d'un objectif, dont la forme engendre une distorsion dépourvue de symétrie de révolution qui provoque une courbure et une variation de longueur dans l'image des objets du champ de vue.

Un tel dispositif trouve une application par exemple en aviation lorsque ladite paroi transparente constitue le hublot de l'avion et ledit récepteur est une caméra embarquée à bord de cet avion et enregistrant la scène. Ce hublot est habituellement de forme conique et les faisceaux optiques qui le traversent subissent de ce fait une forte distorsion qu'il est nécessaire de corriger ou du moins de réduire.

Le dispositif précité apporte une correction de nature optique qui satisfait aux conditions suivantes :
- Le système n'altère pas la résolution de l'image.
- Il est de conception simple, compact et de réglage facile.

Un dispositif de ce genre a déjà fait l'objet, de la part de la demanderesse, d'une demande de brevet européen EP-A 0 270 166 qui appartient à l'état de la technique visé à l'article 54(3) CBE, dans laquelle il s'agissait de corriger une distorsion différentielle entre l'observateur (l'oeil du pilote) et le récepteur (la caméra d'observation).

Le dispositif de l'invention a pour but de corriger la distorsion totale de l'image au niveau de la caméra.

Le problème à résoudre est un peu plus difficile car la place disponible est plus réduite et les champs de vue sont plus importants. La courbure à compenser est donc ici beaucoup plus forte et varie très rapidement avec le champ.

Le dispositif optique proposé pour pallier ces difficultés supplémentaires, du type défini au premier paragraphe, est remarquable en ce qu'il est constitué par la combinaison dudit récepteur et d'un système optique utilisé en faisceaux parallèles et disposé dans le chemin optique entre ledit récepteur et ladite paroi, ledit système optique étant un ensemble unique de deux prismes déviateurs accolés, d'indices de réfraction différents, formant un ensemble achromatique qui opère une déviation et une anamorphose dans une première direction, et l'objectif dudit récepteur ayant une focale réglée pour opérer, en fonction de la distorsion qu'il présente, une anamorphose dans une direction perpendiculaire à ladite première direction.

La description suivante en regard des dessins annexés, le tout donné à titre d'exemple, fera bien comprendre comment l'invention peut être réalisée.

La figure 1 présente les données du problème.

La figure 2 représente les formes de la distorsion à corriger et de celles introduites par la correction.

La figure 3 montre une vue en perspective du dispositif de l'invention.

La figure 4 est une coupe suivant un plan vertical dudit dispositif.

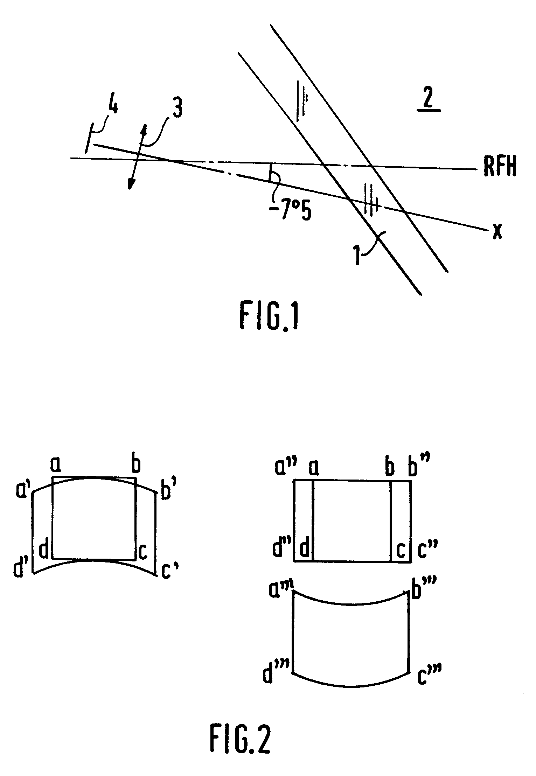

Le schéma de la figure 1 représente la coupe d'une portion du pare-brise 1 de forme conique d'un avion, constitué d'une substance transparente dans une bande spectrale déterminée.

Une caméra vidéo enregistre le paysage 2 en vol à travers ce pare-brise dont la traversée engendre sur l'image de la scène formée dans le plan focal 4 de la pupille de sortie 3 de la caméra, une distorsion d'allure asymétrique que l'on se propose de rattraper, l'axe X de la caméra faisant un angle de - 7,5° avec une direction de référence RFH liée à l'avion.

La figure 2 montre la forme de la distorsion totale produite par le hublot de l'avion et de celles qui doivent être introduites par le dispositif de rattrapage.

Un carré abcd est distordu par le hublot en $a'b'c'd'$. Les raies $a'd'$ et $b'c'$ restant perpendiculaires au côté ab du carré, on peut proposer dans le cas de cet exemple un dispositif correcteur réalisant une anamorphose des raies à gisement constant et une courbure des raies à site constant.

Ainsi ce dispositif transforme le carré d'origine en un rectangle $a''b''c''d''$ et la courbure introduite en $a'''b'''$ et $c'''d'''$ devra être de sens opposé à celle produite par la traversée du hublot.

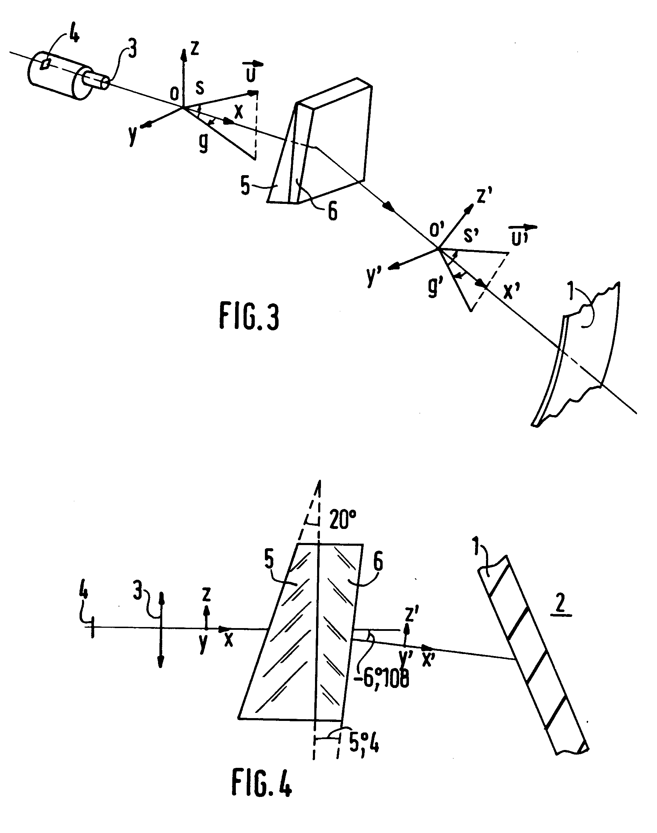

Selon l'invention, le rattrapage est effectué au moyen d'un système optique de structure modulaire monté devant la caméra et dont une vue en perspective est représentée sur la figure 3 montrant le cheminement d'un rayon issu de la pupille de sortie 3 de la caméra. Le système correcteur achromatique est composé d'un ensemble de deux prismes déviateurs accolés 5 et 6 disposés entre la pupille 3 et le pare-brise 1.

Ox étant l'axe optique de la caméra, les coordonnées de tout point de l'espace sont ramenées aux systèmes d'axes rectangulaires oxyz entre la caméra et les prismes accolés et $o'x'y'z'$ après déviation par lesdits prismes.

Pour une déviation de vecteur unitaire $\vec{u}$ d'origine o, la projection de ce vecteur sur le plan horizontal xoy détermine l'angle de gisement g avec l'axe ox et l'angle de site s avec le vecteur $\vec{u}$.

De même, le vecteur unitaire $\vec{u}'$ d'origine o$'$ détermine les angles de gisement g$'$ et de site s$'$ dans le système o$'$x$'$y$'$z$'$.

Les débattements en site et en gisement par rapport à la direction de référence RFH sont les suivants :

s = 4° et - 18°

g = ± 15°

La fonction anamorphose est réalisée par un léger changement de la focale de la caméra d'observation combinée à la dilatation des raies à site constant produites par l'ensemble prismatique 5 et 6.

Le programme de calcul utilise les conventions suivantes pour l'étude du cheminement des rayons lumineux :

- l'origine des site et gisement en entrée de programme coïnâcide avec l'axe ox (axe caméra),
- l'origine en sortie coïncide avec ox$'$, ox$'$ coïncidant avec l'axe optique caméra en sortie du prisme déviateur.

Compte tenu de ces conventions, la direction en entrée est comprise dans les limites suivantes :

- 15° < g < 15°

- 10,5° < s < 11,5°

Pour un site s et un gisement g en sortie de la caméra, le pare-brise distord l'image, de sorte qu'au niveau du paysage, les site et gisement deviennent s + δs et g + δg.

Le système de correction situé entre la caméra et le pare-brise doit donc changer une direction (s,g) issue de la caméra en une direction (s-δs, g-δg).

Pour calculer l'anamorphose dans le sens gisement, on effectue tout d'abord un changement de focale au niveau de la caméra. La distance focale f devient f + δf.

Un format linéaire de dimension y étant vu sous un angle $\theta$ du point nodal de l'objectif de la caméra, on a y = f tg $\theta$ avant changement de focale et y = (f + δf)tg($\theta$ + δ$\theta$) après changement de focale.

Dans le cas d'un objectif complexe, l'écart sur y a une distorsion du troisième ordre en fonction du champ. Il en résulte une distorsion du second ordre pour la focale effective. Le rapport d'homothétie de la focale varie donc en fonction du champ, c'est-à-dire en fonction de s et de g et doit s'écrire

$$\frac{f}{f+\delta f}\ (s,g).$$

En sortie de la caméra, la direction visée est donnée par s$'$ et g$'$ telles que :

$$\text{tgs}' = \frac{f}{f+\delta f}\ (s,g)\text{tgs} \quad \text{pour } g = 0\ ;$$

$$\text{tgs}' = \frac{f}{f+\delta f}\ (s,g)\ \frac{\cos g'}{\cos g}\ \text{tgs} \quad \text{pour } g \neq 0$$

$$\text{et tgg}' = \frac{f}{f+\delta f}\ (s,g)\text{tgg} \quad \text{quel que soit } g.$$

s et g étant comptées à partir de l'axe caméra.

Avant correction, l'objectif de la caméra présente les caractéristiques suivantes :

Focale : 11,2 mm

Diamètre pupille d'entrée ≈ 10 mm.

Le domaine spectral d'étude (pour la correction du chromatisme) est le suivant : $\lambda_{min}$ = 405 nm, $\lambda_{moy}$ = 656 nm, $\lambda_{max}$ = 850 nm. Les déviations ont été calculées pour $\lambda_{moy}$.

A gisement constant, il faut élargir les intervalles séparant les raies ; on a donc g$'$>g et δf<0, ce qui impose une valeur de distance focale plus faible.

Les calculs montrent que l'on doit réaliser une anamorphose de ces raies de l'ordre de 1,064.

La nouvelle focale f$'$ en fonction de l'ancienne vaut donc :

$$f' = \frac{f}{1,064} = \frac{11,2}{1,064} = 10,526 \text{ mm}.$$

Pour créer la courbure des raies à site constant, on utilise la propriété d'un prisme déviateur de produire sur l'image d'une fente parallèle à son arête une courbure dont la concavité est tournée vers la base du prisme.

La courbure étant ici très importante, le prisme 5 placé en tête doit être à forte déviation. Mais l'inconvénient d'un tel prisme est de créer dans le sens site une variation de l'espacement des raies à site constant.

Le moyen de réduire cette variation consiste à placer tête bêche derrière le prisme 5 un autre prisme déviateur 6 répondant aux conditions suivantes :
- la déviation produite par ce prisme doit être beaucoup plus faible pour ne pas annuler la courbure induite par le prisme 5,
- il doit travailler au voisinage du minimum de déviation vers le haut du champ.

La correction totale résulte de la combinaison de tous ces effets :
- anamorphose dans le sens gisement par modification de la focale,
- déviation et anamorphose dans le sens site produites par l'ensemble prismatique.

Sur la figure 4 représentant une coupe du dispositif suivant le plan xoz on a indiqué la valeur de déviation de l'axe optique caméra égale à - 6,108° vers le bas, l'angle au sommet du prisme 5 étant de 20° et l'angle au sommet du prisme 6 étant de 5,4°.

On doit donc basculer l'ensemble caméra + prisme de 6,108° vers le haut par rapport à la position de référence.

Une telle combinaison permet l'achromatisation si les prismes accolés 5 et 6 sont réalisés respectivement dans des verres d'indices 1,508(K7) et 1,796(SF6) par exemple.

Le dispositif de l'invention présente les avantages d'un encombrement réduit et donc d'une diminution des coûts puisqu'il ne comprend que deux pièces optiques.

Par contre, les déviations plus importantes de l'axe optique entraînent un basculement plus grand de l'ensemble correcteur + caméra.

**Revendications**

**1.** Dispositif de rattrapage, dans une certaine bande spectrale, de la distorsion optique résultant de l'observation d'un champ de vue (2) à travers une paroi transparente (1), interposé entre ledit champ de vue (2) et un récepteur (3, 4) muni d'un objectif, dont la forme engendre une distorsion dépourvue de symétrie de révolution qui provoque une courbure et une variation de longueur dans l'image des objets du champ de vue, ledit dispositif étant constitué par la combinaison dudit récepteur (3, 4) et d'un système optique (5, 6) utilisé en faisceaux parallèles et disposé dans le chemin optique entre ledit récepteur et ladite paroi (1), ledit système optique étant un ensemble unique de deux prismes déviateurs accolés (5, 6), d'indices de réfraction différents, formant un ensemble achromatique qui opère une déviation et une anamorphose dans une première direction, et ledit objectif ayant une focale réglée pour opérer, en fonction de la distorsion qu'il présente, une anamorphose dans une direction perpendiculaire à ladite première direction.

**Claims**

**1.** A device for compensating, in a given spectral band, the optical distortion resulting from the observation of a field of view (2) through a transparent wall (1) which is arranged between said field of view (2) and a receiver (3, 4) provided with an objective, and whose shape produces a distortion which is not rotationally symmetrical and introduces a curvature and a variation in length in the image of the objects in the field of view, said device being constituted by the combination of said receiver (3, 4) and an optical system (5, 6) operating with parallel beams and being arranged in the optical path between said receiver and said wall (1), said optical system being a single assembly of two deviation prisms (5, 6) which are cemented to each other, have different refractive indices and form an achromatic assembly which effects a deviation and an anamorphosis in a first direction, said objective having an adjusted focal length for effecting, as a function of its distortion, an anamorphosis in a direction perpendicular to said first direction.

**Patentansprüche**

**1.** Vorrichtung zur Kompensation, in einem bestimmten Spektralbereich, der optischen Verzeichnung, die aus der Betrachtung eines Gesichtsfeldes (2) durch eine transparente, zwischen dem Gesichtsfeld (2) und einem mit einem Objektiv versehenen Empfänger (3, 4) aufgestellte Wand (1) hindurch herrührt, wobei die Form der Wand eine Verzeichnung ohne Rotationssymmetrie verursacht, die eine Krümmung und eine längenänderung in dem Bild der Objekte des Gesichtsfeldes hervorruft, und die Vorrichtung aus der Kombination aus dem genannten Empfänger und aus einem parallele Strahlenbündel verwendenden, optischen System (5, 6) gebildet wird, das in dem Strahlengang zwischen dem Empfänger und der Wand (1) angeordnet ist, wobei das optische System ein einziges Gebilde aus miteinander verbundenen, eine achromatische Gesamtheit bildenden Ablenkprismen (5,6) mit unterschiedlicher Brechzahl ist, das eine Ablenkung und eine Anamorphose in einer ersten Richtung bewirkt, und wobei das Objektiv eine geregelte Brennweite hat, um, als Funktion dessen Verzeichnung, in einer zu der ersten Richtung senkrechten Richtung eine Anamorphose zu bewirken.

FIG.1

FIG.2

FIG.3

FIG.4